# EUROPEAN PATENT APPLICATION

(11) **EP 4 199 288 A1**
(43) Date of publication of application: **21.06.2023**
(21) Application number: 21868034.6
(22) Date of filing: 29.01.2021
(51) Int. Cl.: H02H 11/00, H02H 7/18, H02J 7/00

(54) **ANTI-REVERSE CONNECTION PROTECTION CIRCUIT AND METHOD, AND ELECTROCHEMICAL APPARATUS AND ENERGY STORAGE SYSTEM**

(30) Priority: 18.09.2020 CN 202010988586
(71) Applicant: DONGGUAN POWERAMP TECHNOLOGY LIMITED, Dongguan, Guangdong 523000 (CN)
(72) Inventor: LIU, Qifan, Dongguan, Guangdong 523000 (CN)
(74) Representative: Icosa
(86) International application number: PCT/CN2021/074506
(87) International publication number: WO 2022/057194

(57) **Abstract**

This application provides a reverse polarity protection circuit, where the reverse polarity protection circuit includes a first detection unit, a second detection unit, and a battery management system. The first detection unit and the second detection unit are both electrically connected to an external port of an electrochemical apparatus, and the first detection unit and the second detection unit are configured to detect a parameter of the external port; and when the external port is electrically connected to an external device, the first detection unit and the second detection unit respectively output a first detection signal and a second detection signal to the battery management system based on the parameter of the external port. This application further provides a reverse polarity protection method, an electrochemical apparatus, and an energy storage system. The parameter of the external port is detected, and the first detection signal and the second detection signal are separately output to the battery management system based on the parameter, to determine whether the external port is reversely connected to the external device, thereby implementing advantages such as low costs, high detection precision, and a wide detection range, and improving safety and stability of a battery.

## Description

### TECHNICAL FIELD

This application relates to the field of battery technologies, and in particular, to a reverse polarity protection circuit and method, an electrochemical apparatus, and an energy storage system.

### BACKGROUND

Photovoltaic inverters can convert direct current energy output by photovoltaic (photovoltaic, PV) batteries into alternating currents that have the same frequency, phase, and amplitude as a power grid through power conversion technologies, and transmit electric energy to the power grid. During actual installation, due to improper operations of operators, positive and negative terminals of PV panels are likely to be reversely connected to counterparts of the batteries, thereby damaging the batteries.

In the prior art, structures such as aviation plugs are usually used to avoid reversely connecting output terminals. However, the aviation plugs are expensive and do not have high connection reliability.

### SUMMARY

In view of this, it is necessary to provide a reverse polarity protection circuit and method, an electrochemical apparatus, and an energy storage system, so that a parameter of an external port is detected to output a detection signal, to further determine whether there is a reverse connection between the external port and an external device. The reverse polarity protection circuit and method, the electrochemical apparatus, and the energy storage system have advantages such as low costs, high safety performance, high detection precision, and a wide detection range, significantly improving safety and stability of the battery.

An embodiment of this application provides a reverse polarity protection circuit, applied to an electrochemical apparatus, where the reverse polarity protection circuit includes a first detection unit, a second detection unit, and a battery management system; the first detection unit and the second detection unit are both electrically connected to an external port of the electrochemical apparatus and the battery management system, and the first detection unit and the first detection unit are configured to detect a parameter of the external port; when the external port is electrically connected to an external device, the first detection unit is further configured to output a first detection signal to the battery management system based on the parameter of the external port, and the second detection unit is further configured to output a second detection signal to the battery management system based on the parameter of the external port; and the battery management system determines, based on the first detection signal and the second detection signal, whether the external port is reversely connected to the external device. In this embodiment of this application, the first detection unit and the second detection unit detect in real time the parameter of the external port, and respectively output the first detection signal and the second detection signal to the battery management system, and therefore it may be determined, based on the first detection signal and the second detection signal, whether the external port is reversely connected to the external device, and a reverse connection of the external port can be precisely identified, thereby implementing advantages such as low costs, high safety performance, high detection precision, and a wide detection range, significantly improving safety and stability of the battery.

According to some embodiments of this application, when a signal value of the first detection signal is less than a first threshold and a signal value of the second detection signal is greater than a second threshold, the battery management system determines that the external port is normally connected to the external device. When the signal value of the first detection signal is greater than a third threshold and the signal value of the second detection signal is less than a fourth threshold, the battery management system determines that the external port is reversely connected to the external device, where the first threshold is less than the second threshold, and the third threshold is greater than the fourth threshold. Therefore, the battery management system may determine, based on the first detection signal and the second detection signal, whether the external port is reversely connected to the external device, which can significantly improve safety and stability of the battery.

According to some embodiments of this application, the first detection unit includes an amplifier, where a first input terminal of the amplifier is grounded, a second input terminal of the amplifier is electrically connected to a first terminal of the external port through a first resistor, to detect the parameter of the external port, the second input terminal of the amplifier is further electrically connected to an output terminal of the amplifier through a second resistor, and the output terminal of the amplifier is electrically connected to the battery management system. The amplifier is connected to the external port, to detect the parameter of the external port and whether the external port is reversely connected to the external device is determined based on the parameter.

According to some embodiments of this application, the second detection unit includes a diode, a third resistor, and a fourth resistor, where a first terminal of the third resistor is grounded, a second terminal of the third resistor is electrically connected to a first terminal of the fourth resistor, a second terminal of the fourth resistor is electrically connected to the first terminal of the external port, a node between the first terminal of the fourth resistor and the second terminal of the third resistor is electrically connected to the battery management system, a cathode of the diode is electrically connected to the node between the first terminal of the fourth resistor and the second terminal of the third resistor, and an anode of the diode is grounded.

According to some embodiments of this application, the parameter includes a voltage of the external port, where when the external port is reversely connected to the external device, the external port is at a first voltage, or when the external port is normally connected to the external device, the external port is at a second voltage.

According to some embodiments of this application, the reverse polarity protection circuit further includes a switch unit, where the switch unit is electrically connected to a power supply loop of a battery cell unit and the external port, and the switch unit is configured to control closing or opening of the power supply loop.

According to some embodiments of this application, when determining, based on the first detection signal and the second detection signal, that the external port is reversely connected to the external device, the battery management system outputs a first control signal to the switch unit, to drive the switch unit to be opened; or when determining, based on the first detection signal and the second detection signal, that the external port is normally connected to the external device, the battery management system outputs a second control signal to the switch unit, to drive the switch unit to be closed. Therefore, when there is a reverse connection at the external port, the battery management system can control the switch unit to be opened, to protect the safety of the battery in a timely manner. When the external port is normally connected to the external device, the battery management system can control the switch unit to be closed, so that the battery can be normally charged and discharged.

According to some embodiments of this application, the battery management system includes a micro control unit, where the first detection unit outputs the first detection signal to a first pin of the micro control unit based on the parameter of the external port, and the second detection unit outputs the second detection signal to a second pin of the micro control unit based on the parameter of the external port.

An embodiment of this application further provides a reverse polarity protection method, applied to an electrochemical apparatus, where the reverse polarity protection method includes: detecting a parameter of an external port of an electrochemical apparatus when the external port connected to an external device; when the external port is electrically connected to the external device, outputting, by a first detection unit and a second detection unit respectively, a first detection signal and a second detection signal to a battery management system based on the parameter of the external port; and determining, by the battery management system based on the first detection signal and the second detection signal, whether the external port is reversely connected to the external device. Therefore, the battery management system in this embodiment of this application may determine, based on the first detection signal and the second detection signal, whether the external port is reversely connected to the external device, and a reverse connection of the external port can be precisely identified, thereby implementing advantages such as low costs, high safety performance, high detection precision, and a wide detection range, and significantly improving safety and stability of the battery.

According to some embodiments of this application, when a signal value of the first detection signal is less than a first threshold and a signal value of the second detection signal is greater than a second threshold, the battery management system determines that the external port is normally connected to the external device; and when the signal value of the first detection signal is greater than a third threshold and the signal value of the second detection signal is less than a fourth threshold, the battery management system determines that the external port is reversely connected to the external device, where the first threshold is less than the second threshold, and the third threshold is greater than the fourth threshold.

According to some embodiments of this application, when the battery management system determines that the external port is reversely connected to the external device, the battery management system outputs a first control signal to a switch unit, to drive the switch unit to be opened, where the switch unit is electrically connected to a power supply loop of a battery cell unit and the external port, and the switch unit is configured to control closing or opening of the power supply loop.

According to some embodiments of this application, when the battery management system determines that the external port is normally connected to the external device, the battery management system outputs a second control signal to the switch unit, to drive the switch unit to be closed.

According to some embodiments of this application, the parameter includes a voltage of the external port, where when the external port is reversely connected to the external device, the external port is at a first voltage, or when the external port is normally connected to the external device, the external port is at a second voltage.

An embodiment of this application further provides an electrochemical apparatus, where the electrochemical apparatus includes a battery cell unit, an external port, and the foregoing reverse polarity protection circuit, where the switch unit is electrically connected to a power supply loop of the battery cell unit and the external port, and the switch unit is configured to control closing or opening of the power supply loop.

An embodiment of this application further provides an energy storage system, where the energy storage system includes a power conversion system and the foregoing electrochemical apparatus, and the electrochemical apparatus is electrically connected to the power conversion system.

According to some embodiments of this application, the energy storage system further includes a photovoltaic assembly, where the photovoltaic assembly is electrically connected to the power conversion system.

According to the reverse polarity protection circuit and method, the electrochemical apparatus, and the energy storage system provided in the embodiments of this application, the parameter of the external port is detected to determine whether there is the reverse connection, and the detection signal is output to the battery management system when the external port is reversely connected to the external device. In this way, the reverse polarity protection circuit and method, and the electrochemical apparatus provided in the embodiments of this application have advantages such as low costs, high safety performance, high detection precision, and a wide detection range, significantly improving safety and stability of the battery.

### BRIEF DESCRIPTION OF DRAWINGS

FIG. 1 is a block diagram of an electrochemical apparatus according to an embodiment of this application.
FIG. 2 is a circuit diagram of an example embodiment of a charger detection circuit in FIG. 1.
FIG. 3 is a flowchart of steps of a charger detection method according to an embodiment of this application.

**Reference signs of main components:**

| | |
|---|---|
| Electrochemical apparatus | 100 |
| Reverse polarity protection circuit | 10 |
| First detection unit | 12 |
| Second detection unit | 14 |
| Battery management system | 16 |
| Switch unit | 18 |
| Battery cell unit | 20 |
| External port | 30 |
| Micro control unit | U1 |
| Amplifier | U2 |
| First switch and second switch | Q1-Q2 |
| Capacitor | C1 |
| Resistor | R1-R13 |
| Diode | D1 |
| External device | 200 |
| Photovoltaic assembly | 210 |
| Power conversion system | 220 |

This application is further described in detail in the following specific embodiments with reference to the accompanying drawings.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

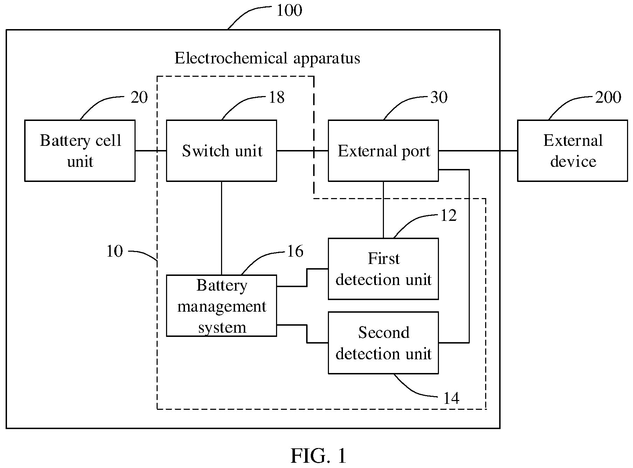

FIG. 1 is a block diagram of an example embodiment of an electrochemical apparatus 100 according to this application. The electrochemical apparatus 100 may be electrically connected to an external device 200.

The electrochemical apparatus 100 includes a reverse polarity protection circuit 10, a battery cell unit 20, and an external port 30. In this embodiment of this application, the external port 30 is configured to electrically connect the external device 200. The reverse polarity protection circuit 10 is electrically connected to the external port 30, to detect and identify whether the external port 30 is forward or reversely connected to the external device 200.

It can be understood that the external device 200 in this embodiment of this application may include a photovoltaic (photo voltaic, PV) assembly 210 and a power conversion system (power conversion system, PCS) 220, and the photovoltaic assembly 210 is electrically connected to the power conversion system 220.

In this embodiment of this application, the reverse polarity protection circuit 10 includes a first detection unit 12, a second detection unit 14, a battery management system (battery management system, BMS) 16, and a switch unit 18.

Specifically, the first detection unit 12 and the second detection unit 14 are both configured to electrically connect the external port 30 of the electrochemical apparatus 100 and the battery management system 16, and in this way, the first detection unit 12 and the second detection unit 14 may detect a parameter of the external port 30 when the external port 30 is electrically connected to the external device 200.

It can be understood that, in this embodiment of this application, the parameter of the external port 30 may be a voltage value.

In some embodiments of this application, when the external port 30 is electrically connected to the external device 300, the first detection unit 12 may output a first detection signal to the battery management system 16 based on the parameter of the external port 30. The second detection unit 14 may output a second detection signal to the battery management system 16 based on the parameter of the external port 30.

Therefore, the battery management system 16 in this embodiment of this application may determine, based on the first detection signal and the second detection signal, whether the external port 30 is reversely connected to the external device 200.

Specifically, when the external port 30 of the electrochemical apparatus 100 is electrically connected to the external device 200, the first detection unit 12 and the second detection unit 14 detect the parameter of the external port 30. In this case, the first detection unit 12 reduces a reverse voltage of the external port 30 in an inverse proportion, and transmits a calculated signal to the battery management system 16. That is, the first detection unit 12 may output the first detection signal to the battery management system 16 based on the parameter of the external port 30. In addition, the second detection unit 14 may also output the second detection signal to the battery management system 16 based on the parameter of the external port 30. In this case, when a signal value of the first detection signal is greater than a first threshold and a signal value of the second detection signal is less than a second threshold, the battery management system 16 determines that the external port 30 is reversely connected to the external device 200. When the signal value of the first detection signal is less than the first threshold and the signal value of the second detection signal is greater than the second threshold, the battery management system 16 determines that the external port 30 is normally connected to the external device 200.

The switch unit 18 is electrically connected to a power supply loop of the battery cell unit 20 and the external port 30, and the switch unit 18 is configured to control closing or opening of the power supply loop.

Specifically, when the external port 30 is reversely connected to the external device 200, the battery management system 16 outputs a first control signal to the switch unit 18, to drive the switch unit 18 to be opened. When the external port 30 is normally connected to the external device 200, the battery management system 16 outputs a second control signal to the switch unit 18, to drive the switch unit 18 to be closed. In this way, the reverse polarity protection circuit 10 can correspondingly control a state of the switch unit 18 based on a connection status of the external port 30, to further control charging and discharging of the battery cell unit 20.

It can be understood that the "forward connection" in this embodiment of this application means that a positive terminal P1+ of the external port 30 is electrically connected to a positive terminal P2+ of the external device 200, and that a negative terminal P1- of the external port 30 is electrically connected to a negative terminal P2- of the external device 200.

It can be understood that the "reverse connection" in this embodiment of this application means that a positive terminal P1+ of the external port 30 is electrically connected to a negative terminal P2- of the external device 200, and that a negative terminal P1- of the external port 30 is electrically connected to a positive terminal P2+ of the external device 200.

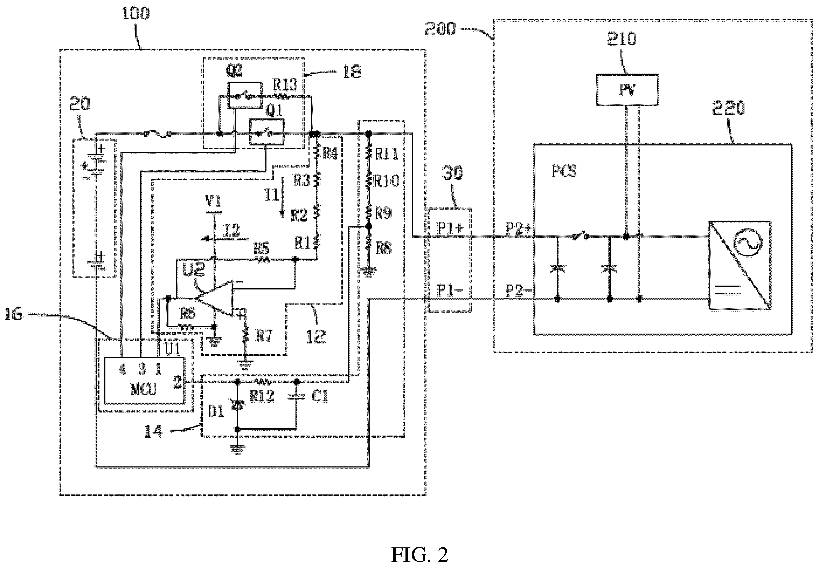

FIG. 2 is a circuit diagram of an example embodiment of an electrochemical apparatus 100 according to this application.

The battery management system 16 may include a micro control unit U1. The micro control unit U1 may include a first pin 1, a second pin 2, a third pin 3, and a fourth pin 4.

In this embodiment of this application, the first detection unit 12 includes an amplifier U2 and seven resistors R1 to R7.

A second input terminal of the amplifier U2 is electrically connected to the positive terminal P1+ of the external port 30 through four resistors R1 to R4 in sequence, to detect the parameter of the external port 30. The second input terminal of the amplifier U2 is further electrically connected to an output terminal of the amplifier U2 through a resistor R5, the output terminal of the amplifier U2 is electrically connected to the first pin 1 of the micro control unit U1, and the output terminal of the amplifier U2 is further grounded through a resistor R6. The second input terminal of the amplifier U2 is grounded through the resistor R7. A power terminal of the amplifier U2 is electrically connected to a power supply V1, and a ground terminal of the amplifier U2 is grounded.

In this embodiment of this application, the second detection unit 14 includes five resistors R8 to R12, a capacitor C1, and a diode D1.

A first terminal of the resistor R8 is grounded, and a second terminal of the resistor R8 is electrically connected to the positive terminal P1+ of the external port 30 through resistors R9 to R11 in sequence, to detect the parameter of the external port 30. A node between the first terminal of the resistor R8 and the resistor R9 is electrically connected to the second pin 2 of the micro control unit U1 through the resistor R12. A first terminal of the capacitor C1 is electrically connected to an anode of the diode, and a second terminal of the capacitor C1 is electrically connected to the node between the first terminal of the resistor R8 and the resistor R9. A cathode of the diode D1 is electrically connected to the node between the first terminal of the resistor R8 and the resistor R9 through the resistor R12, and an anode of the diode is grounded. Therefore, the diode D1 can prevent the battery management system 16 and the battery cell unit 20 from being damaged by a reverse voltage when the external port 30 is reversely connected.

The switch unit 18 includes a first switch Q1 and a second switch Q2. A first terminal of the first switch Q1 is electrically connected to the third pin 3 of the micro control unit U1, a second terminal of the first switch Q1 is electrically connected to the first terminal B+ of the battery cell unit 20 through a fuse, and a third terminal of the first switch Q1 is electrically connected to the positive terminal P1+ of the external port. A first terminal of the second switch Q2 is electrically connected to the fourth pin 4 of the micro control unit U1, a second terminal of the second switch Q2 is electrically connected to a first terminal B+ of the battery cell unit 20 through a fuse, and a third terminal of the second switch Q1 is electrically connected to the positive terminal P1+ of the external port through a resistor R13. A second terminal B- of the battery cell unit 20 is electrically connected to the negative terminal P1- of the external port 30.

It can be understood that the first switch Q1 and the second switch Q2 in this embodiment of this application may be NMOS field effect transistors, and the first terminal, the second terminal, and the third terminal of either of the first switch Q1 and the second switch Q2 may be respectively a gate, a drain, and a source of the NMOS field effect transistor. In another example embodiment, the first switch Q1 and the second switch Q2 may also be other electronic switches, such as NPN transistors.
In this embodiment of this application, when the external port 30 is normally connected to the external device 200, for example, when the positive terminal P+ of the external port 30 is at +500 V relative to the negative terminal P-, a voltage of a first input terminal of the amplifier U2 is denoted as VIN+, a voltage of the output terminal of the amplifier U2 is denoted as VO, a voltage of the second input terminal of the amplifier U2 is denoted as VIN-, a current flowing through the resistors R1 to R4 is denoted as I1, a current flowing through the resistor R5 is denoted as I2, and resistance of the resistors R1 to R5 is respectively denoted as R1 to R5, based on a virtual short principle of input of an operational amplifier, VIN+ = VIN- = 0 V Therefore, the current I1 = (500V - VIN-)/(R1 + R2 + R3 + R4) = 500 V/(R1 + R2 + R3 + R4).

Based on a virtual break principle of input of the operational amplifier, I1 = I2.

Therefore, it may be concluded that (VIN - (-VO))/R5 = 500 V/(R1 + R2 + R3 + R4). That is, it may be concluded that VO = -500 V/(R1 + R2 + R3 + R4) × R5.

Because the amplifier U2 is powered by a positive power supply, the output terminal of the amplifier U2 is necessarily at above 0 V. Therefore, when the external port 30 is normally connected to the external device 200, and the positive terminal P+ of the external port 30 is at a positive voltage relative to the negative terminal P-, an output voltage VO of the output terminal of the amplifier U2 can be 0 V. However, in this case, the output voltage of the output terminal of the amplifier U2 is less than a first threshold k1, where 0 V < k1 < 0.5 V. That is, a detection signal received by the first pin 1 of the micro control unit may be 0 V.

Then, when the external port 30 is normally connected to the external device 200, for example, when the positive terminal P+ of the external port 30 is at +500 V relative to the negative terminal P-, a voltage of the second pin 2 of the micro control unit U1 is denoted as VI, and resistance of the resistors R8 to R11 is respectively denoted as R8 to R11, it can be deduced that the voltage VI = 500 V × R8/(R8 + R9 + R10 + R11). That is, in this case, the voltage VI of the second pin 2 of the micro control unit U1 may be greater than a second threshold k2, where 0 V < k2 <5 V. That is, in this case, the second pin 2 of the micro control unit U1 can detect a voltage with a voltage value of 500 V × R8/(R8 + R9 + R10 + R11).

Therefore, when a signal value of the first detection signal is less than the first threshold k1 and a signal value of the second detection signal is greater than the second threshold k2, the micro control unit U1 determines that the external port 30 is normally connected to the external device 200. It can be understood that, in an optional embodiment, the first threshold k1 may be less than the second threshold k2.

In this embodiment of this application, when the external port 30 is reversely connected to the external device 200, for example, when the positive terminal P+ of the external port 30 is at -500 V relative to the negative terminal P-,
based on a virtual short principle of input of an operational amplifier, VIN+ = VIN- = 0 V. Therefore, the current I1 = (-500V - VIN-)/(R1 + R2 + R3 + R4) = 500 V/(R1 + R2 + R3 + R4).

Based on a virtual break principle of input of the operational amplifier, I1 = I2.

Therefore, it may be concluded that (VIN - (-VO))/R5 = -500V/(R1 + R2 + R3 + R4). That is, it may be concluded that VO = 500 V/(R1 + R2 + R3 + R4) × R5.

The voltage of the output terminal of the amplifier U2 is 500 V/(R1 + R2 + R3 + R4) × R5. Therefore, when the external port 30 is reversely connected to the external device 200, a voltage received by the first pin 1 of the micro control unit is 500 V/(R1 + R2 + R3 + R4) × R5. That is, in this case, the voltage VI of the second pin 2 of the micro control unit U1 may be greater than a third threshold k3, where 0 V < k3 <5 V. Then, when the external port 30 is reversely connected to the external device 200, for example, when the positive terminal P+ of the external port 30 is at -500 V relative to the negative terminal P-, the voltage of the second pin 2 of the micro control unit U1 is 0 V. However, in this case, the output voltage of the output terminal of the amplifier U2 is less than a fourth threshold k4, where 0 V < k4 < 0.5 V. That is, in this case, the second pin 2 of the micro control unit U1 can detect a detection signal indicating a voltage value of 0 V.

Therefore, when the signal value of the first detection signal is greater than the third threshold k3 and the signal value of the second detection signal is less than the second threshold k4, the micro control unit U1 determines that the external port 30 is reversely connected to the external device 200. It can be understood that, in an optional embodiment, the third threshold k3 may be greater than the fourth threshold k4.

The circuit diagram shown in FIG. 2 is used as an example below to describe working principles of the reverse polarity protection circuit and the electrochemical apparatus of this application.

During use, if the external port 30 is normally connected to the external device 200, in this case, the positive terminal P+ of the external port 30 is at +500 V relative to the negative terminal P-, and then the amplifier U2 reduces the voltage in an inverse proportion. That is, the output terminal of the amplifier U2 outputs a voltage of 0 V to the first pin 1 of the micro control unit U1. In addition, the second detection unit 14 also outputs a voltage with a voltage value of 500 V × R8/(R8 + R9 + R10 + R11) to the second pin 2 of the micro control unit U1. Therefore, the micro control unit U1 may determine, based on detection signals received by the two signal pins, that the external port 30 is normally connected to the external device, and output a control signal to the first switch Q1 and the second switch Q2, to control the first switch Q1 and the second switch Q2 to be closed, thereby controlling the battery cell unit 20 to enter a charge state.

Further, if the external port 30 is reversely connected to the external device 200, the positive terminal P+ of the external port 30 is at -500 V relative to the negative terminal P-, and then the amplifier U2 reduces the reverse voltage in an inverse proportion. That is, the output terminal of the amplifier U2 outputs a voltage of 500 V/(R1 + R2 + R3 + R4) × R5 to the first pin 1 of the micro control unit U1. In addition, the second detection unit 14 also outputs, to the second pin 2 of the micro control unit U1, a voltage signal indicating a voltage value of 0 V. Therefore, the micro control unit U1 may determine, based on detection signals received by the two signal pins, that the external port 30 is reversely connected to the external device 200. That is, it is forbidden to close pre-charge and main relays. The battery management system 16 reports a reverse connection fault, and outputs a control signal to the switch unit 18 to control the battery cell unit 20 to stop charging and discharging, which prevents a high voltage from entering the battery apparatus and causing system damage, thereby improving safety performance of the battery apparatus.

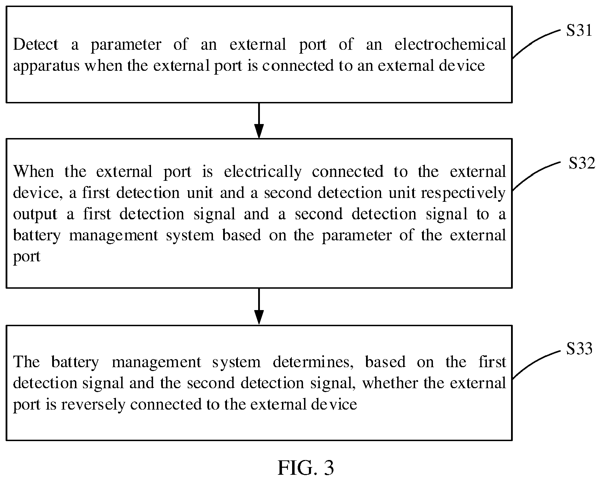

FIG. 3 is a flowchart of steps of a reverse polarity protection method according to an embodiment of this application. The reverse polarity protection method may include the following steps.

Step S31: Detect a parameter of an external port of an electrochemical apparatus when the external port is connected to an external device.

In this embodiment of this application, a first detection unit and a second detection unit are electrically connected to the external port of the electrochemical apparatus, and the first detection unit and the second detection unit are configured to detect the parameter of the external port when the external port is electrically connected to the external device. It can be understood that the parameter of the external port may be a voltage value of the external port.

Step S32: When the external port is electrically connected to the external device, the first detection unit and the second detection unit respectively output a first detection signal and a second detection signal to a battery management system based on the parameter of the external port.

Step S33: The battery management system determines, based on the first detection signal and the second detection signal, whether the external port is reversely connected to the external device.

In this embodiment of this application, the battery management system may determine, based on the detection signal received by the two signal pins, whether the external port is reversely connected to the external device, that is, it is forbidden to close pre-charge and main relays, to control a battery cell unit to stop charging and discharging, which prevents a high voltage from entering the battery apparatus and causing system damage, thereby improving safety performance of the battery apparatus.

Further, when a signal value of the first detection signal is less than a first threshold k1 and a signal value of the second detection signal is greater than a second threshold k2, the battery management system determines that the external port is normally connected to the external device, where 0 V < k1 < 0.5 V, and 0 V < k2 < 5 V. When the signal value of the first detection signal is greater than a third threshold k3 and the signal value of the second detection signal is less than a fourth threshold k4, the battery management system determines that the external port is reversely connected to the external device, where 0 V < k3 < 5 V, and 0 V < k4 < 0.5 V.

In this embodiment of this application, if the external port 30 is normally connected to the external device 200, a control signal is output to a switch unit 18, to control the battery cell unit 20 to enter a charge state.

According to the reverse polarity protection circuit and method, and the electrochemical apparatus provided in the embodiments of this application, the parameter of the external port is detected to determine whether there is the reverse connection, and the detection signal is output to the battery management system when the external port is reversely connected to the external device. In this way, the reverse polarity protection circuit and method, and the electrochemical apparatus provided in the embodiments of this application have advantages such as low costs, high safety performance, high detection precision, and a wide detection range, significantly improving safety and stability of the battery.

Persons of ordinary skills in the art should realize that the foregoing embodiments are only intended to illustrate this application, but are not intended to limit this application, and appropriate changes and modifications made to the foregoing embodiments without departing from the substantial spirit and scope of this application shall fall within the protection scope of the claims of this application.

## Claims

1. A reverse polarity protection circuit, applied to an electrochemical apparatus, **characterized in that** the reverse polarity protection circuit comprises a first detection unit, a second detection unit, and a battery management system, wherein
the first detection unit and the second detection unit are both electrically connected to an external port of the electrochemical apparatus and the battery management system, and the first detection unit and the first detection unit are configured to detect a parameter of the external port;
when the external port is electrically connected to an external device, the first detection unit is further configured to output a first detection signal to the battery management system based on the parameter of the external port, and the second detection unit is further configured to output a second detection signal to the battery management system based on the parameter of the external port; and
the battery management system is used to determine, based on the first detection signal and the second detection signal, whether the external port is reversely connected to the external device.

2. The reverse polarity protection circuit according to claim 1, **characterized in that**,
when a signal value of the first detection signal is less than a first threshold and a signal value of the second detection signal is greater than a second threshold, the battery management system determines that the external port is normally connected to the external device; and when the signal value of the first detection signal is greater than a third threshold and the signal value of the second detection signal is less than a fourth threshold, the battery management system determines that the external port is reversely connected to the external device, wherein the first threshold is less than the second threshold, and the third threshold is greater than the fourth threshold.

3. The reverse polarity protection circuit according to claim 1, **characterized in that** the first detection unit comprises an amplifier, wherein a first input terminal of the amplifier is grounded, a second input terminal of the amplifier is electrically connected to a first terminal of the external port through a first resistor, to detect the parameter of the external port, the second input terminal of the amplifier is further electrically connected to an output terminal of the amplifier through a second resistor, and the output terminal of the amplifier is electrically connected to the battery management system.

4. The reverse polarity protection circuit according to claim 3, **characterized in that** the second detection unit comprises a diode, a third resistor, and a fourth resistor, wherein a first terminal of the third resistor is grounded, a second terminal of the third resistor is electrically connected to a first terminal of the fourth resistor, a second terminal of the fourth resistor is electrically connected to the first terminal of the external port, a node between the first terminal of the fourth resistor and the second terminal of the third resistor is electrically connected to the battery management system, a cathode of the diode is electrically connected to the node between the first terminal of the fourth resistor and the second terminal of the third resistor, and an anode of the diode is grounded.

5. The reverse polarity protection circuit according to claim 1, **characterized in that** the parameter comprises a voltage of the external port, wherein when the external port is reversely connected to the external device, the external port is at a first voltage, or when the external port is normally connected to the external device, the external port is at a second voltage.

6. The reverse polarity protection circuit according to claim 2, **characterized in that** the reverse polarity protection circuit further comprises a switch unit, wherein the switch unit is electrically connected to a power supply loop of a battery cell unit and the external port, and the switch unit is configured to control closing or opening of the power supply loop.

7. The reverse polarity protection circuit according to claim 6, **characterized in that** when determining, based on the first detection signal and the second detection signal, that the external port is reversely connected to the external device, the battery management system outputs a first control signal to the switch unit, to drive the switch unit to be opened; or when determining, based on the first detection signal and the second detection signal, that the external port is normally connected to the external device, the battery management system outputs a second control signal to the switch unit, to drive the switch unit to be closed.

8. The reverse polarity protection circuit according to claim 7, **characterized in that** the battery management system comprises a micro control unit, wherein the first detection unit outputs the first detection signal to a first pin of the micro control unit based on the parameter of the external port, and the second detection unit outputs the second detection signal to a second pin of the micro control unit based on the parameter of the external port.

9. A reverse polarity protection method, applied to an electrochemical apparatus, **characterized in that** the reverse polarity protection method comprises:
detecting a parameter of an external port of an electrochemical apparatus when the external port is connected to an external device;
when the external port is electrically connected to the external device, outputting, by a first detection unit and a second detection unit respectively, a first detection signal and a second detection signal to a battery management system based on the parameter of the external port; and
determining, by the battery management system based on the first detection signal and the second detection signal, whether the external port is reversely connected to the external device.

10. The reverse polarity protection method according to claim 9, **characterized in that**,
when a signal value of the first detection signal is less than a first threshold and a signal value of the second detection signal is greater than a second threshold, the battery management system determines that the external port is normally connected to the external device; and when the signal value of the first detection signal is greater than a third threshold and the signal value of the second detection signal is less than a fourth threshold, the battery management system determines that the external port is reversely connected to the external device, wherein the first threshold is less than the second threshold, and the third threshold is greater than the fourth threshold.

11. The reverse polarity protection method according to claim 10, **characterized in that** when the battery management system determines that the external port is reversely connected to the external device, the battery management system outputs a first control signal to a switch unit, to drive the switch unit to be opened, wherein the switch unit is electrically connected to a power supply loop of a battery cell unit and the external port, and the switch unit is configured to control closing or opening of the power supply loop.

12. The reverse polarity protection method according to claim 11, **characterized in that** when the battery management system determines that the external port is normally connected to the external device, the battery management system outputs a second control signal to the switch unit, to drive the switch unit to be closed.

13. The reverse polarity protection method according to claim 9, **characterized in that** the parameter comprises a voltage of the external port, wherein when the external port is reversely connected to the external device, the external port is at a first voltage, or when the external port is normally connected to the external device, the external port is at a second voltage.

14. An electrochemical apparatus, **characterized in that** the electrochemical apparatus comprises a battery cell unit, an external port, and the reverse polarity protection circuit according to any one of claims 1 to 8, wherein the switch unit is electrically connected to a power supply loop of the battery cell unit and the external port, and the switch unit is configured to control closing or opening of the power supply loop.

15. An energy storage system, **characterized in that** the energy storage system comprises a power conversion system and the electrochemical apparatus according to claim 14, wherein the electrochemical apparatus is electrically connected to the power conversion system.

16. The energy storage system according to claim 15, **characterized in that** the energy storage system further comprises a photovoltaic assembly, wherein the photovoltaic assembly is electrically connected to the power conversion system.
